# EUROPEAN PATENT SPECIFICATION

(11) **EP 1 895 143 B1**
(45) Date of publication and mention of the grant of the patent: **29.02.2012**
(21) Application number: 06766948.1
(22) Date of filing: 20.06.2006
(51) Int. Cl.: F02M 21/02, F02B 43/00, F02N 3/02

(54) **FUEL FEEDER FOR GAS ENGINE**
BRENNSTOFFZUFUHRVORRICHTUNG FÜR EINEN GASMOTOR
DISPOSITIF D' ALIMENTATION EN CARBURANT POUR MOTEUR A GAZ

(30) Priority: 20.06.2005 JP 2005179922
(43) Date of publication of application: 05.03.2008
(73) Proprietor: HONDA MOTOR CO., LTD., Tokyo (JP)
(72) Inventor: FUJINUMA, Masanori, c/o HONDA R & D CO., LTD., Wako-shi, Saitama 3510193 (JP); KOJIMA, Hiroaki, c/o HONDA R & D CO., LTD., Wako-shi, Saitama 3510193 (JP); SUGIMOTO, Yasuhiro, c/o HONDA R & D CO., LTD., Wako-shi, Saitama 3510193 (JP)
(74) Representative: Trossin, Hans-Jürgen
(86) International application number: PCT/JP2006/312287
(87) International publication number: WO 2006/137380

(56) References cited:
- JP-A- 56 101 021
- JP-A- 2002 295 312
- JP-A- 2003 056 377
- JP-U- 01 080 656
- US-A- 3 184 295
- US-A- 5 509 393

## Description

### TECHNICAL FIELD

The present invention relates to an improvement of a fuel supply system for a gas engine, the system including a liquefied gas fuel supply source, a pressure regulator for regulating pressure after liquefied fuel fed from the liquefied gas fuel supply source is converted into vaporized fuel, and a mixer for mixing the pressure-regulated vaporized fuel with air and supplying it to a gas engine, a shutoff valve being provided in a liquefied fuel passage between the liquefied gas fuel supply source and the pressure regulator.

### BACKGROUND ART

Such a fuel supply system for a gas engine is already known, as disclosed in Patent Publication 1 below.
Patent Publication 1: Japanese Patent Application Laid-open No. 2002-70652

### DISCLOSURE OF INVENTION

### PROBLEMS TO BE SOLVED BY THE INVENTION

In such a conventional fuel supply system for a gas engine, as disclosed in Patent Publication 1, the shutoff valve for the liquefied fuel passage is formed as an electromagnetic type, and when the gas engine is started this shutoff valve is opened by means of electrical power of a battery.

However, such a conventional arrangement is not suitable for a gas engine not equipped with a battery, and even for a gas engine equipped with a battery, if the battery is not sufficiently charged, it is impossible to open the electromagnetic shutoff valve.

In US 3184295 A, on which the preamble of claim 1 is based, an electric shutoff valve 11 is shown.

In US 5509393 A, a vacuum lockoff valve 20 is shown to be open during manual recoil starting by pressure pulsations in the crankcase, via a one-way valve 26 and a bypass bleed orifice 28.

The present invention has been accomplished in the light of such circumstances, and it is an object thereof to provide a fuel supply system for a gas engine of the above type that enables a shutoff valve to be opened from when the gas engine is started even for a gas engine that is not equipped with a battery or even when a battery of a gas engine is not sufficiently charged.

### EFFECTS OF THE INVENTION

In accordance with the first aspect of the present invention, the shutoff valve can be automatically opened from when the gas engine is started even for a gas engine that is not equipped with a battery or even when a battery of a gas engine is not sufficiently charged. It is therefore possible to reliably feed vaporized fuel to the mixer and thus operate the gas engine smoothly. Moreover, when a new liquefied gas fuel supply source is connected to the liquefied fuel passage, by forcibly opening the shutoff valve by operating the manual valve-opening pulling rod, it is possible to prepare for starting of the gas engine by quickly charging the liquefied fuel passage and the pressure regulator with fuel.

Furthermore, in accordance with the second aspect of the present invention, since pulsating pressure generated in the crank chamber of the gas engine is utilized as a valve-opening force for the shutoff valve, the shutoff valve can reliably be opened in association with a manual starting operation for the gas engine.

Moreover, in accordance with the third aspect of the present invention, since, after the gas engine is started, the second shutoff valve is put into a valve open state by means of the output of the generator, the degree of opening of the liquefied fuel passage increases, and sufficient vaporized fuel can be supplied to the mixer even when running under high load.

### BRIEF DESCRIPTION OF DRAWINGS

[FIG. 1] FIG. 1 is a schematic diagram of fuel supply of a gas engine equipped with a fuel supply system related to the present invention.
[FIG. 2] FIG. 2 is a diagram, corresponding to FIG. 1, showing fuel supply system not covered by the present invention.

### EXPLANATION OF REFERENCE NUMERALS AND SYMBOLS

- E: Gas engine

- 3: Generator
- 3': Generator that can generate power even during cranking
- 7: Mixer
- 12: Vaporized fuel passage
- 13: Pressure regulator
- 15: Liquefied fuel passage
- 16: Liquefied gas fuel supply source (fuel cylinder)
- 21: First shutoff valve
- 22: Second shutoff valve
- 23: Shutoff valve
- 38: Manual valve-opening rod .

### BEST MODE FOR CARRYING OUT THE INVENTION

Modes for carrying out the present invention are explained below by reference to the embodiment of the present invention shown in the attached drawings.

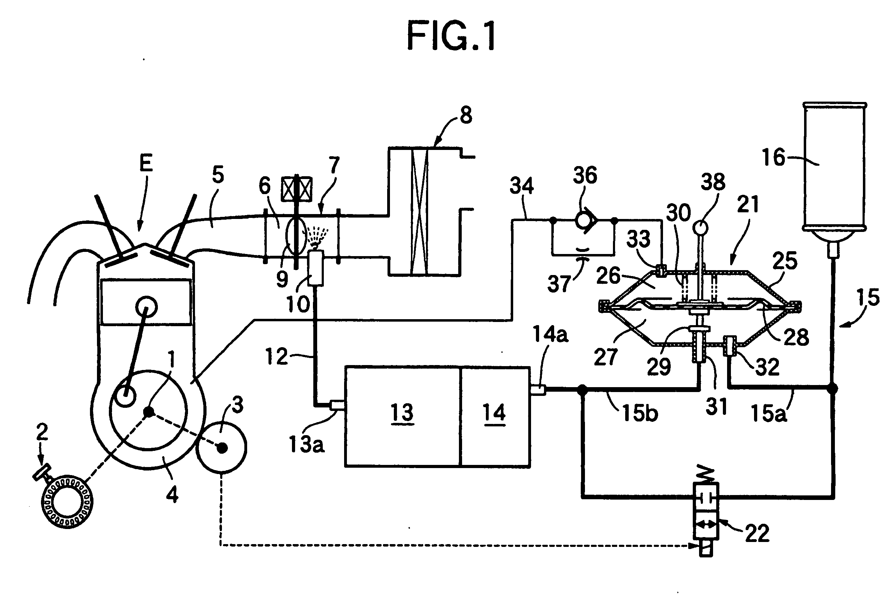

The present invention is now explained by reference to the embodiment of the present invention shown in FIG. 1.

A crankshaft 1 of a gas engine E is coupled to a recoil starter 2 that can crank the gas engine E when it is started and a generator 3 that is driven by the crankshaft 1.

This gas engine E is equipped with a mixer 7 having an intake passage 6 communicating with an intake port 5 of the gas engine E, and this mixer 7 is connected to an air cleaner 8 for filtering intake air passing through the intake passage 6.

The mixer 7 is provided with a throttle valve 9 for opening and closing the intake passage 6 and a fuel nozzle 10 opening into the intake passage 6 upstream of the throttle valve 9, and the upstream end of a vaporized fuel passage 12 communicating with the fuel nozzle 10 is connected to a fuel outlet 13a of a pressure regulator 13. A vaporizing chamber 14 is provided in the pressure regulator 13, and a fuel inlet 14a of the vaporizing chamber 14 is connected to the downstream end of a liquefied fuel passage 15 extending from a cassette type fuel cylinder 16 charged with a liquefied gas fuel (e.g. liquefied butane gas). The pressure regulator 13 regulates high pressure vaporized fuel, which has been vaporized in the vaporizing chamber 14, at atmospheric pressure.

A first shutoff valve 21 and a second shutoff valve 22 are disposed in the liquefied fuel passage 15 in parallel to each other. The first shutoff valve 21 includes a housing 25, a diaphragm 28 dividing the interior of the housing 25 into a negative pressure operating chamber 26 and a valve chamber 27, a valve body 29 coupled to a central part of the diaphragm 28 on the valve chamber 27 side, and a valve-closing spring 30 housed in the negative pressure operating chamber 26 and urging the diaphragm 28 toward the valve chamber 27 side. The housing 25 is provided with a valve seat pipe 31, on which the valve body 29 is seated, a fuel inlet pipe 32 always opening into the valve chamber 27, and a negative pressure inlet pipe 33 always opening into the negative pressure operating chamber 26, the fuel inlet pipe 32 being connected to the downstream end of an upstream portion 15a of the liquefied fuel passage 15 extending from the fuel cylinder 16, and the valve seat pipe 31 being connected to the upstream end of a downstream portion 15b of the liquefied fuel passage 15 reaching the vaporizing chamber 14.

A pressure passage 34 extending from a crank chamber 4 of the gas engine E is connected to the negative pressure inlet pipe 33. A one way valve 36 and a leak orifice 37 are disposed in the pressure passage 34 in parallel to each other, the one way valve 36 transmitting to the negative pressure operating chamber 26 side only the negative pressure of the pulsating pressure of the crank chamber 4.

Coupled to the diaphragm 28 and the valve body 29 is a manual rod 38 slidably and hermetically running through a ceiling wall of the housing 25, and by putting the manual rod 38 the valve body 29 can be forcibly detached from the valve seat pipe 31.

The second shutoff valve 22 is formed as an electromagnetic type, and is energized and opened by power generated by the generator 3.

The operation of the first embodiment is now explained.

When the crankshaft 1 of the gas engine E is cranked by manually operating the recoil type starter 2 in order to start the gas engine E, of the pulsating pressure generated in the crank chamber 4 accompanying reciprocation of a piston, only the negative pressure is transmitted to the negative pressure operating chamber 26 of the first shutoff valve 21 via the one way valve 36, the diaphragm 28 is drawn to the negative pressure operating chamber 26 side against the urging force of the return spring 30, and the valve body 29 joined to the diaphragm 28 is therefore detached from the valve seat pipe 31. As a result, high pressure liquefied fuel within the fuel cylinder 16 flows into the vaporizing chamber 14 via the liquefied fuel passage 15, the fuel inlet pipe 32, the valve chamber 27, and the valve seat pipe 31 of the first shutoff valve 21, is converted into vaporized fuel within the chamber 14, then moves to the pressure regulator 13, is regulated at atmospheric pressure, and is supplied to the fuel nozzle 10 of the mixer 7 via the vaporized fuel passage 12. In the intake passage 6 of the mixer 7, a gaseous mixture of atomized fuel from the fuel nozzle 10 and air filtered through the air cleaner 8 is formed, and is supplied to the gas engine E while its flow rate is controlled by the throttle valve 9, thereby enabling the gas engine E to be smoothly started.

In this way, since the arrangement is such that the first shutoff valve 21 is opened by utilizing pulsating pressure generated in the crank chamber 4 of the gas engine E, the first shutoff valve 21 can reliably be opened in association with a manual starting operation of the gas engine E. The first shutoff valve 21 therefore can be automatically opened from when starting regardless of whether or not the gas engine E is equipped with a battery or a battery of the gas engine is sufficiently charged, vaporized fuel can reliably be fed to the mixer 7, and the gas engine E can be operated smoothly.

When the gas engine E attains a normal running state and the generator 3 driven by the crankshaft 1 thereof attains a normal power generating state, since part of the output thereof is supplied to the electromagnetic second shutoff valve 22, the second shutoff valve 22 is immediately energized and opened. The liquefied fuel passage 34 therefore increases its degree of opening by opening of the first and second shutoff valves 21 and 22, and even when the gas engine E is running under high load conditions, sufficient vaporized fuel can be supplied to the mixer 7. Moreover, the second shutoff valve 22 can be formed from a small, inexpensive electromagnetic valve due to it being provided together with the first shutoff valve 21.

When running of the gas engine E is stopped, the crank chamber 4 attains an atmospheric pressure state, negative pressure built up in the negative pressure operating chamber 26 of the first shutoff valve 21 leaks toward the crank chamber 4 side through the leak orifice 37, which is in parallel to the one way valve 36, the negative pressure operating chamber 26 also attains an atmospheric pressure state, and the valve body 29 is therefore stably seated on the valve seat pipe 31 due to the urging force of the valve-closing spring 30. Meanwhile, the generator 3 also stops generating power, and the second shutoff valve 22 returns to a valve-closed state. In accordance with such shutting off of the liquefied fuel passage 15 by closing of the first and second shutoff valves 21 and 22, it is possible to prevent liquefied fuel from being needlessly supplied from the fuel cylinder 16 to the vaporizing chamber 14 and The pressure regulator 13. It is therefore possible to prevent the gaseous mixture from becoming too rich due to a large, amount of liquefied fuel being supplied to the mixer 7 when the gas engine E.is restarted, thereby ensuring that the gas engine E operates normally.

When fuel within the fuel cylinder 16 is used up and a new fuel cylinder 16 is connected to the liquefied fuel passage 34, putting up the manual rod 38 of the first shutoff valve 21 enables the valve body 29 to be detached from the valve seat pipe 31 against the urging force of the return spring 30, thus forcibly putting the first shutoff valve 21 into an open valve state, and it is therefore possible to quickly charge the liquefied fuel passage 34 and the pressure regulator 13 with fuel, thereby preparing the gas engine E for starting.

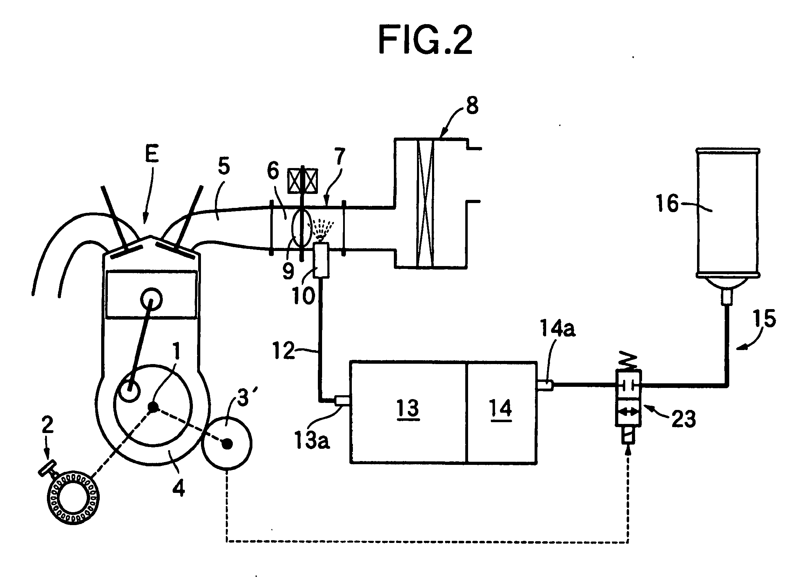

A fuel supply system not covered by the present invention shown in FIG 2 is now explained.

In this fuel supply system a generator 3' driven by a crankshaft 1 of a gas engine E is arranged so that it can generate power from when cranking the gas engine E by a starting operation of a recoil type starter 2. A shutoff valve 23 disposed in a liquefied fuel passage 15 is formed as an electromagnetic type so that it is opened by power generated by the generator 3': Since the arrangement is otherwise the same as that of the preceding embodiment, in FIG. 2 parts corresponding to those of the preceding embodiment are denoted using the same reference numerals and symbols, thus avoiding duplicating the explanation.

In accordance with the fuel supply system not covered by the present invention, the shutoff valve 23 can be arranged simply, and not only can the shutoff valve 23 be opened in association with the above starting operation of the gas engine E, but it is also possible to maintain the shutoff valve 23 stably in an open valve state even when the gas engine E is in a normal running state.

The present invention is not limited to the above-mentioned embodiments, and may be modified in a variety of ways as long as the modifications do not depart from the scope of the claims.

## Claims

1. A fuel supply system for a gas engine, the system comprising a liquefied gas fuel supply source (16), a pressure regulator (13) for regulating pressure after liquefied fuel fed from the liquefied gas fuel supply source (16) is converted into vaporized fuel, and a mixer (7) for mixing the pressure-regulated vaporized fuel with air and supplying it to a gas engine (E), a shutoff valve (21) being provided in a liquefied fuel passage (15) between the liquefied gas fuel supply source (16) and the pressure regulator (13),
**characterized in that** the shutoff valve (21) is formed so as to be opened by manual cranking of the gas engine (E) and is provided with a manual valve-opening putting rod (38) that can manually open the shutoff valve (21).

2. The fuel supply system for a gas engine according to claim 1,
wherein the shutoff valve (21) is formed so as to move in response to pulsating pressure generated in a crank chamber (4) of the gas engine (E) accompanying cranking of the gas engine (E).

3. The fuel supply system for a gas engine according to claim 1 or 2,
wherein the shutoff valve (21) is a first shutoff valve, and an electromagnetic second shutoff valve (22) is provided in the liquefied fuel passage (15) in parallel to the first shutoff valve (21), the second shutoff valve (22) being opened by power generated by a generator (3) driven by the gas engine (E).

## Patentansprüche

1. Brennstoffzufuhrsystem für einen Gasmotor, wobei das System eine Flüssig-Brenngas-Zufuhrquelle (16), einen Druckregler (13) zum Regulieren des Drucks, nachdem der von der Flüssig-Brenngas-Zufuhrquelle (16) zugeführte Flüssigbrennstoff in Brennstoffdampf umgewandelt worden ist, und einen Mischer (7) zum Mischen des druckregulierten Brennstoffdampfs mit Luft und zum Zuführen desselben zu einem Gasmotor (E), wobei in einem Flüssigbrennstoffkanal (15) zwischen der Flüssig-Brenngas-Zufuhrquelle (16) und dem Druckregler (13) ein Absperrventil (21) vorgesehen ist,
**dadurch gekennzeichnet, dass** das Absperrventil (21) so ausgebildet ist, dass es durch manuelles Anlassen des Gasmotors (E) geöffnet wird, und mit einer manuellen Ventilöffnungszugstange (38) versehen ist, die das Absperrventil (21) manuell öffnen kann.

2. Das Brennstoffzufuhrsystem für einen Gasmotor nach Anspruch 1, worin das Absperrventil (21) so ausgebildet ist, dass es sich in Antwort auf pulsierenden Druck bewegt, der beim Anlassen des Gasmotors (E) in einer Kurbelkammer (4) des Gasmotors (E) erzeugt wird.

3. Das Brennstoffzufuhrsystem für einen Gasmotor nach Anspruch 1 oder 2, worin das Absperrventil (21) ein erstes Absperrventil ist, und ein elektromagnetisches zweites Absperrventil (22) in dem Flüssigbrennstoffkanal (15) parallel zu dem ersten Absperrventil (21) vorgesehen ist, wobei das zweite Absperrventil (22) durch Strom geöffnet wird, der von einem vom Gasmotor (E) angetriebenen Generator (3) erzeugt wird.

## Revendications

1. Système d'alimentation en carburant pour un moteur à gaz, le système comprenant une source d'alimentation en carburant gazeux liquéfié (16), un régulateur de pression (13) pour réguler la pression après que le carburant liquéfié alimenté à partir de la source d'alimentation en carburant gazeux liquéfié (16) a été converti en carburant vaporisé, et un mélangeur (7) pour mélanger le carburant vaporisé régulé en pression avec de l'air et l'amener dans un moteur à gaz (E), une soupape d'arrêt (21) étant prévue dans un passage de carburant liquéfié (15) entre la source d'alimentation en carburant gazeux liquéfié (16) et le régulateur de pression (13),
**caractérisé en ce que** la soupape d'arrêt (21) est formée afin d'être ouverte en démarrant manuellement à la manivelle le moteur à gaz (E) et est prévue avec une tige de traction d'ouverture de soupape manuelle (38) qui peut manuellement ouvrir la soupape d'arrêt (21).

2. Système d'alimentation en carburant pour un moteur à gaz selon la revendication 1, dans lequel la soupape d'arrêt (21) est formée afin de se déplacer en réponse à la pression de pulsion générée dans une chambre de manivelle (4) du moteur à gaz (E) accompagnant le démarrage à la manivelle du moteur à gaz (E).

3. Système d'alimentation en carburant pour un moteur à gaz selon la revendication 1 ou 2, dans lequel la soupape d'arrêt (21) est une première soupape d'arrêt, et une deuxième soupape d'arrêt électromagnétique (22) est prévue dans le passage de carburant liquéfié (15) parallèlement à la première soupape d' arrêt (21), la deuxième soupape d' arrêt (22) étant ouverte par du courant généré par un générateur (3) entraîné par le moteur à gaz (E).
